(19) Europäisches Patentamt European Patent Office Office européen des brevets

(11) **EP 4 477 387 A1**

(12) **EUROPEAN PATENT APPLICATION**

(43) Date of publication:
**18.12.2024 Bulletin 2024/51**

(21) Application number: **23178765.6**

(22) Date of filing: **12.06.2023**

(51) International Patent Classification (IPC):
**B29C 64/112** (2017.01)   **B41J 3/407** (2006.01)
**B41J 25/00** (2006.01)

(52) Cooperative Patent Classification (CPC):
**B29C 64/112; B29C 64/241; B29C 64/393;
B33Y 10/00; B33Y 30/00; B33Y 50/02;
B41J 25/003;** B41J 2/2114; B41J 2/2117

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Canon Production Printing Holding
B.V.
5914 HH Venlo (NL)**

(72) Inventors:
• **MESTROM, Paulus M.A.**
**Venlo (NL)**
• **CALLEWAERT, Tom W.J**
**Venlo (NL)**
• **FILIPPOVYCH, Kateryna**
**Venlo (NL)**

(74) Representative: **Canon Production Printing IP
Department
Canon Production Printing Netherlands B.V.
Van der Grintenstraat 10
5914 HH Venlo (NL)**

(54) **METHOD FOR PRINTING MULTIPLE LAYERS OF AN OBJECT**

(57) Method for printing a plurality of layers of an object on a surface in an XY plane in a print direction in the XY plane in at least one pass of at least one printhead (16, 22) of a printing system (1) relatively over the surface per layer, while ejecting filling material from nozzles of the at least one printhead towards the surface. nozzle distances between the nozzles of the at least one printhead determine a first resolution in a direction perpendicular to the print direction. The at least one printhead is rotatable parallel to the XY plane. Specifications of the object are received which define the object to be printed with a second resolution in the direction perpendicular to the print direction, which second resolution is higher than the first resolution. At least one of the at least one printhead is rotated parallel to the XY plane such that projections of the nozzle distances on a direction perpendicular to the print direction correspond to the second resolution. The plurality of layers of the object are printed with the second resolution by ejecting filling material from the nozzles of the at least one rotated printhead towards the surface.

**EP 4 477 387 A1**

Fig. 4

**Description**

FIELD OF THE INVENTION

The invention relates to a method for printing a plurality of layers of an object on a surface in an XY plane in a print direction in the XY plane in at least one pass of at least one printhead of a printing system relatively over the surface per layer, while ejecting filling material from nozzles of the at least one printhead towards the surface, wherein nozzle distances between the nozzles of the at least one printhead determine a first resolution in a direction perpendicular to the print direction.

The invention further relates to a computer program product, including computer readable code embodied on a computer readable medium, said computer readable code comprising instructions for applying the method according to the invention and to a printing system configured to apply the method according to the invention.

The printing system may hereinafter also be referred to as a printer.

The printhead may hereinafter also be referred to as an inkjet printing assembly.

The term "perpendicular" may hereinafter also be referred to as the term "orthogonal".

The term "nozzle" may be also referred to as "print element".

The printhead is meant to be configured to move relatively over the surface. In one case this means that the printhead is moving over the surface while the surface is not moving. In another case it means that the surface is moving under the printhead while the printhead is not moving. In one more other case the surface as well as the printhead are moving. All cases are applicable to the present invention.

A relative move of the printhead in one direction over the surface while ejecting filling material is called a pass. The image formed by filling material which is ejected during one pass on the surface is called a swath.

The filling material may be ink of different colours, e.g. cyan, magenta, yellow, black and white, varnish, coating liquid or any other (transparent) liquid or substance which can adhere to each other in order to deliver a high quality 3D print object.

Nozzle distances between nozzles of the at least one printhead determine the first resolution in a direction perpendicular to the print direction. In fact the minimum distance between nozzles determines the first resolution. In practice the minimum distance between nozzles will be a distance between two adjacent nozzles in a row of nozzles on the printhead.

The printhead according to the present invention comprises a plurality of nozzles which may be arranged in at least one row which is directed in the direction perpendicular to the print direction. The print direction is the direction in which the printhead is moving while printing, i.e. while ejecting filling material towards the surface.

BACKGROUND OF THE INVENTION

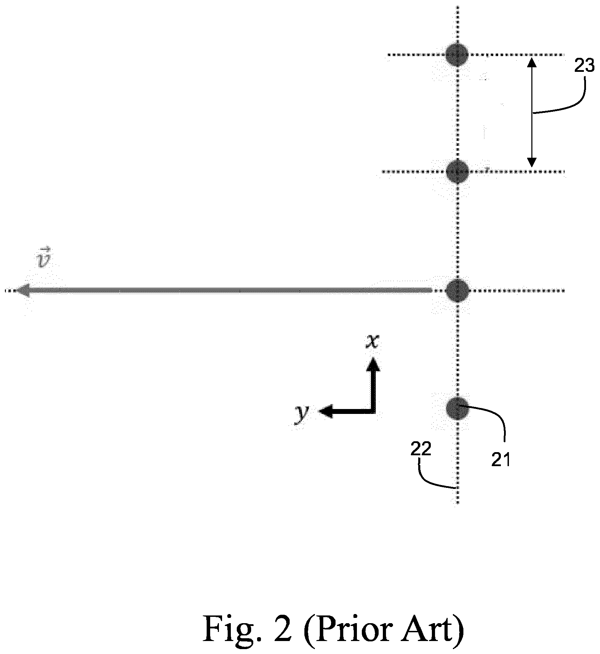

A schematic example of a prior art 3D inkjet printing process for printing multiple layers of an object is shown in Fig. 2. The printhead 22 move above the print surface residing in the XY plane many times (or equivalently the print surface moves underneath the printhead 22 many times). Whenever the printhead 22 passes the surface in the XY plane, droplets are jetted out of the nozzles 21 onto the surface. In this way, a 3D structure is printed on the surface. The number of passes that are needed depends on the required resolution as well as on the size of the printed object. The standard 3D inkjet printing technique involves printheads whose nozzle arrays are oriented orthogonally to the print direction y which is an obvious choice when the printed objects are large. Fig. 2 shows how the nozzle array of the printhead 22 is oriented as in a standard 3D inkjet printing process. The y direction is defined as the direction of motion of the printhead 22 relative to the surface (indicated by a velocity vector v), whereas the x direction is defined orthogonally to the y direction in the plane of constant gravity. The red dots 21 indicate the nozzles. The nozzle array of the printhead 22 is oriented along the x direction. Fig. 2 also defines a distance 23 between two adjacent nozzles.

In this standard approach the resolution along the x direction can be increased by passing the surface multiple times. In each pass the printhead 22 is slightly shifted in the x direction.

In order to print an object of multiple layers with sufficient accuracy, the resolution of the printing system should be large enough. For inkjet printing, the first resolution is determined by the distance between two adjacent drops on the surface or on a previous layer of the object to be printed and thus indirectly by the distance between two adjacent nozzles in combination with the drop size.

Current solutions to increase the resolution along a direction that is orthogonal to the print direction are expensive or reduce the productivity of the printer. For a printhead with a fixed distance between the nozzles, the resolution orthogonally to the print direction can be increased by increasing the number of passes and shifting the printhead along this orthogonal direction for each pass. However, this slows down the printing process. The resolution orthogonally to the print direction can also be increased by developing a printhead whose nozzles are more closely spaced. The cost of this development is a main disadvantage of such a solution.

An object of the invention is to provide a method for printing a plurality of layers of an object with a reduced number of passes.

SUMMARY OF THE INVENTION

According to the present invention this object is achieved by the method according to the invention, wherein the at least one printhead is rotatable parallel to the XY plane and the method comprises the steps of

> a) receiving specifications of the object which define the object to be printed with a second resolution in the direction perpendicular to the print direction, which second resolution is higher than the first resolution,
> b) rotating at least one of the at least one printhead parallel to the XY plane such that projections of the nozzle distances on a direction perpendicular to the print direction correspond to the second resolution, and
> c) printing the plurality of layers of the object with the second resolution by ejecting filling material from the nozzles of the at least one rotated printhead towards the surface.

The number of passes is decreased by slanting the printheads. This is advantageous because the productivity of the printer increases. In case of a UV curable ink jet printer, less curing steps are needed for printing objects with UV curable inks. This is advantageous since it increases the strength of these objects because the total surface area to which the ink droplets have to attach decreases.

According to the present invention the at least one printhead is extended with at least one printhead holder that is rotatable in the XY plane. The at least one printhead holder is a mechanical means which holds the printhead and is rotatable. In case of multiple printheads, the printheads may be positioned in a row parallel to the print direction. The rotation axes of all printheads may preferably lie along a same line parallel to the print direction.

In an inkjet printing process for printing a 3D object the at least one printhead moves above the surface many times (or equivalently the surface moves underneath the at least one printhead many times). Whenever the at least one printhead passes the surface, droplets are jetted out of the nozzles towards the surface. In this way, a 3D structure is printed on the surface. The number of passes that are needed depends on a required resolution as well as on a size of the printed object.

The standard inkjet printing technique involves printheads whose nozzle arrays are oriented orthogonally to the print direction which is an obvious choice when the printed objects are large. However, when the object is rather small in the direction orthogonal to the print direction with respect to the width of the printhead in the direction orthogonal to the print direction, and when the printhead is rotated according to the present invention over a substantial angle the object can still be completely printed. The resolution in the direction orthogonal to the print direction is increased.

According to an embodiment the step of printing of the layers of the object comprises the sub-step of adapting the firing moments of the nozzles in time in order to print the object according to the received specifications. Since the at least one printhead is planned to be rotated or actually has been already rotated, a nozzle of the printhead will be moved in the y direction and the x direction by rotating the printhead according to a rotation circle through the nozzle.

A firing moment of the nozzle may therefore be scheduled earlier in time or later in time as the original firing moment except for nozzle(s) that are positioned at the turning point of the printhead or the printhead holder, i.e. the common middle of the rotation circles through the nozzles. Also the data to be printed will be adapted since the rotation of a nozzle positions the nozzle at other x and y coordinates at which other data may have to be printed according to the received specifications. In other words, firing moments of the nozzles should be adjusted due to the shift in position of the nozzles compared to the original situation with zero rotation angle. This adjustment is needed to get the right print along the y direction.

The data to be printed, i.e. a bitmap, has to be adapted since the resolution in the x direction increases when rotating the printhead. This adaptation is needed to get the right print along the x direction.

According to an embodiment the rotating step comprises a rotation of the at least one printhead with a rotation angle unequal to zero radians.

According to an embodiment the step of receiving specifications of the object to be printed comprises the sub-step of receiving a width of the object to be printed, said width being parallel to the XY plane and being orthogonal to the print direction and the method comprises the step of defining the second resolution by means of said width.

According to an embodiment the step of receiving specifications of the object to be printed comprises the sub-step of receiving a specification of at least one kind of filling material which is to be used during printing of the object.

According to an embodiment the method comprises the step of selecting another drop size of the filling material to be ejected from the nozzles, and the step of rotating at least one of the at least one printhead parallel to the XY plane comprises the sub-step of rotating the at least one of the at least one printhead parallel to the XY plane with a rotation angle which corresponds to a third resolution corresponding to the other selected drop size.

According to an embodiment the method comprises the step of selecting a plurality of filling materials for printing the object, each filling material intended to be ejected with a dedicated print resolution by a dedicated printhead and rotating each dedicated printhead parallel to the XY plane with a rotation angle that corresponds to the dedicated resolution.

According to an embodiment the printing system comprises a plurality of printheads and the method comprises the steps of receiving specifications of the object which define the object to be printed by the plurality of printhead with for each printhead a dedicated resolution in the direction perpendicular to the print direction, for each printhead rotating the printhead parallel to the XY plane such that projections of the nozzle distances on a direction perpendicular to the print direction correspond to the dedicated resolution, and for each printhead printing the plurality of layers of the object with the dedicated resolution by ejecting filling material from the nozzles of the rotated printhead.

According to an embodiment the printing system comprises at least two printheads of which one printhead is not rotated.

The present invention also relates to a printing system for printing a plurality of layers of an object on a surface in an XY plane in a print direction in the XY plane in at least one pass of at least one printhead of the printing system relatively over the surface per layer, the at least one printhead comprising a plurality of nozzles for ejecting filling material towards the surface, wherein nozzle distances between the nozzles of the plurality of nozzles determine a first resolution in a direction perpendicular to the print direction and the at least one printhead is rotatable parallel to the XY plane, and wherein the printing system comprises a print controller which is configured to execute the method according to the present invention.

According to an embodiment each printhead is extended with a printhead holder that is rotatable in the XY plane.

The present invention also relates to a computer program product, including computer readable code embodied on a computer readable medium, said computer readable code comprising instructions for executing the steps of a method according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

BRIEF DESCRIPTION OF THE DRAWINGS

Hereinafter the present invention is further elucidated with references to the appended drawings showing non-limiting embodiments and wherein:

Fig. 1    is a printing system in which the invented method is applicable;

Fig. 2    is a schematic drawing of a printhead for printing multiple layers on top of each other according to the prior art as described herebefore;

Fig. 3 - 4    are schematic drawings of at least one printhead for printing multiple layers on top of each other according to the present invention; and

Fig. 5    is a flow diagram of an embodiment of the method according to the invention.

DETAILED DESCRIPTION OF EMBODIMENTS

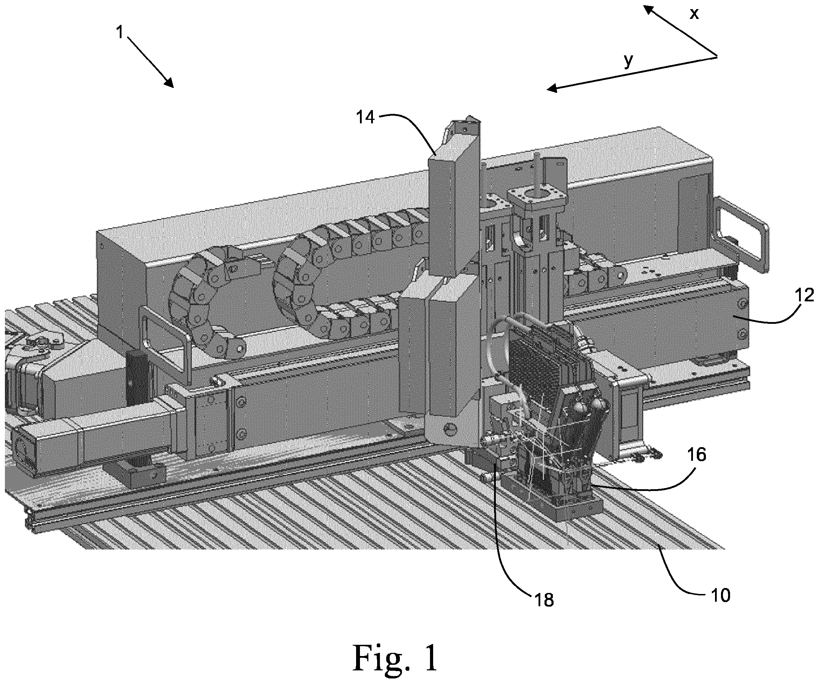

Fig. 1 shows an inkjet printer 1 in which the present invention is applicable. The inkjet printer 1 comprises holders (not shown) for filling material to be ejected by means of at least one printhead 16. The at least one printhead 16 is mounted on a carriage 12 which traverses over a print surface 10 in a y direction in the XY plane. The nozzles (not shown) are positioned in the at least one printhead 16 in a row in an x direction in the XY plane perpendicular to the y direction when the printhead 16 is not yet in a rotated state. The printhead 16 is provided with a rotatable printhead holder 18 in order to rotate the printhead 16 in the XY plane.

The printer 1 in Fig. 1 shows two printheads 16, but a printer having one or more than two printheads mounted on the carriage 12 may also be envisioned and fall under the scope of the present invention.

The printer 1 comprises a print controller 14 comprising boxes with electronics for controlling the printheads 16. The print controller 14 is connected to a digital network for receiving print jobs submitted by users. The print controller comprises a Central Processing Unit (CPU), a Graphical Processor Unit (GPU), a Random Access Memory (RAM), a Read Only Memory (ROM), a network unit, an interface unit, a user interface for user input at the printer 1, a hard disk (HD) and an image processing unit such as a Raster Image Processor (RIP). The aforementioned units are interconnected through a bus system. However, the print controller 14 may also be a distributed controller. The user interface may be provided with user input and display means for receiving specifications of the object which define the object to be printed with a particular resolution. However the specifications of the particular resolution may also be part of a submitted print job to be received by the print controller via the digital network.

The CPU controls the printing system 1 in accordance with control programs stored in the ROM or on the HD and a local user interface panel. The CPU also controls the image processing unit and the GPU. The ROM stores programs and data such as boot program, set-up program, various set-up data or the like, which are to be read out and executed by the CPU. The hard disk is an example of a non-volatile storage unit for storing and saving programs and data which make the CPU execute a print process to be described later. The hard disk also comprises an area for saving the data of externally submitted print jobs. The programs and data on the HD are read out onto the RAM by the CPU as needed. The RAM has an area for temporarily storing the programs and data read out from the ROM and HD by the CPU, and a work area which is used by the CPU to execute various processes. The interface unit connects the controller to client devices and to the printing system 1. The network unit connects the print controller 14 to the network and is designed to provide communication with workstations and with other devices reachable via the network. The image processing unit may be implemented as a software component running on an operation system of the controller or as a firmware program, for example embodied in a field-programmable gate array (FPGA) or an application-specific integrated circuit (ASIC). The image processing unit has functions for reading, editing, interpreting and rasterizing the print job data. Said print job data contains image data to be printed i.e. pixel or voxel data of the object to be printed, described in a Page Description Language or the like, image processing attributes and print settings like a number of layers to be printed on top of each other, a desired resolution, a desired filling material, a desired resolution per desired filling material, a desired filling material per desired resolution, etc.

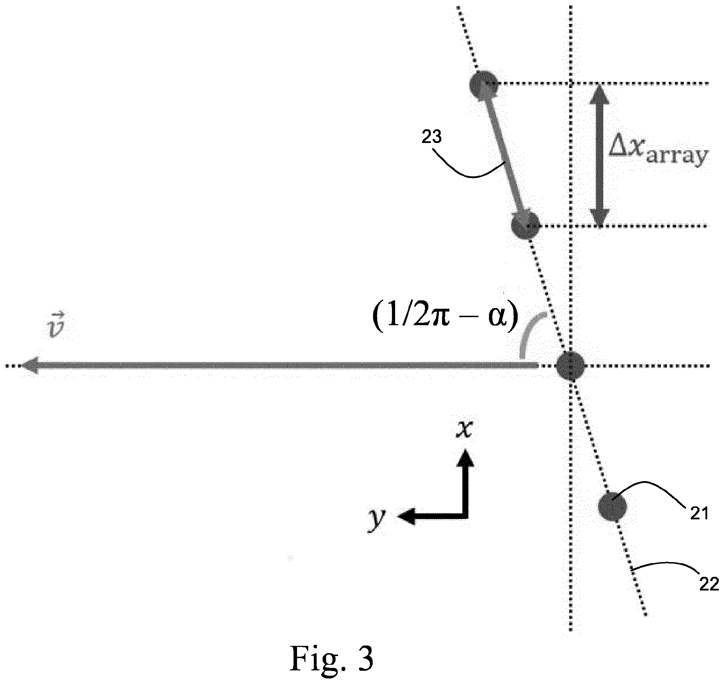

Fig. 3 is a schematic drawing of a printing system for printing multiple layers on top of each other according to the present invention.

The printhead 22 is rotated under a variable angle $\alpha$ in the XY plane. Fig. 3 shows how the nozzle array of a printhead 22 can be oriented in our proposed 3D inkjet printing process. The y direction is defined as the direction of motion of the printhead relative to the surface (indicated by the velocity vector v), whereas the x direction is defined orthogonally to the y direction in the plane of constant gravity. The nozzle arrays of the printhead 22 are rotated over an angle $\alpha$ in the XY plane. The red dots 21 indicate the nozzles. The nozzle array of the printhead 22 is rotated over an angle $\alpha$ in the XY plane. Fig. 3 also defines a distance 23 between two adjacent nozzles and $\Delta x_{array}$ as the distance between two adjacent nozzles of the same array projected on the x axis. Hereinafter the distance 23 will also be denoted by the expression $\Delta_{nozzle}$

The rotation angle $\alpha$ changes the distance $\Delta x_{array}$ between two adjacent nozzles of the same array projected on the x axis according to the formula:

$$\Delta x_{array} = \cos(\alpha) * \Delta_{nozzle}$$

where $\Delta_{nozzle}$ is the distance between two adjacent nozzles (see Fig.3). This implies that increasing $\alpha$ decreases $\Delta x_{array}$ and therefore increases the resolution along the x direction. However, the print width per pass along the x direction also scales with $\cos(\alpha)$ and thus decreases for increasing $\alpha$.

The rotation angle $\alpha$ may be greater or smaller than zero. For example, the resolution is doubled by rotating over an angle $N*\pi + \pi/3$ where N is an arbitrary positive or negative integer and $\pi$ is approximately 3.14.

Also the data to be printed will be adapted since the rotation of a nozzle positions the nozzle at other x and y coordinates at which other data may have to be printed according to the received specifications. If a particular nozzle is for example originally at a (xo, 0) position in the XY plane, after rotation with a rotation angle $\alpha$ around a position (0,0), the particular nozzle will be at a ($x_0 * \cos\alpha$, $x_0 * \sin\alpha$) position in the XY plane as shown in Fig. 3.

Slanting the printheads 22 is ideal for printing objects which have a width which is typically smaller than the printhead width, for example dental objects of approximately 1 cm. As long as the print width per pass along the x direction is larger than the width of the printed object, slanting the printhead 22 does not increase the number of passes that are needed to print the object. In fact, the number of passes decreases due to the increase of the resolution along the x direction. This decrease speeds up the print process.

According to an embodiment the printhead 22 is extended with a printhead holder 18 as shown in Fig. 1 that is rotatable in the XY plane. The rotatability of the printhead holder gives new opportunities to optimize the 3D print process. The orientation of each printhead can be rotated before (or even during) every print job. For each print job an optimal resolution may be chosen bounded by the print width that is needed for that print job. Also, when the holders of different printheads can be rotated individually, different materials may be printed with different resolutions along the x direction.

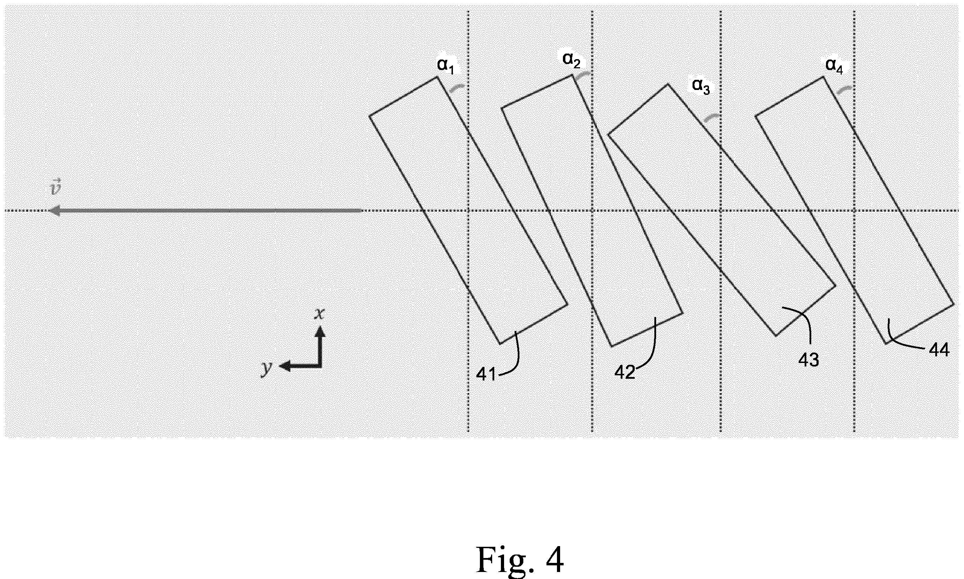

Fig. 4 shows an embodiment of the present invention wherein the printer is provided with multiple rotatable printhead holders. The holders are indicated by the black rectangles 41 - 44. The holders 41 - 44 are rotated over an angle $\alpha_i$ respectively where i = 1, 2, 3, 4 labels the respective printhead holder. The origin of rotation is indicated by the points where the black dotted lines cross. The relative velocity between the printhead holders 41 - 44 and the surface is indicated by the vector v. For illustration purposes Fig. 4 shows a number of 4 printheads. However, any other number of printheads may be envisioned according to the present invention.

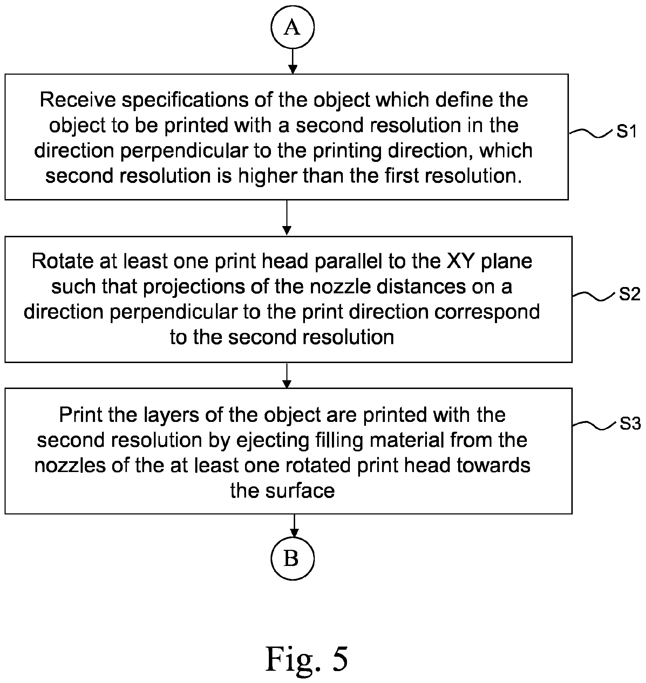

Fig. 5 is a flow diagram of an embodiment of the method according to the invention as explained hereabove. The flow diagram starts in start point A.

In a first step S1 specifications of the object are received which define the object to be printed with a second resolution in the direction perpendicular to the print direction, which second resolution is higher than the first resolution. The specifications can be received by a wired or wireless network to which the printer is connected, or by means of a user interface of the printer by manual input by an operator. The specifications of the object may for example comprise image data having a certain number of pixels per inch or voxels per cubic inch. From the certain number of pixels or voxels the desired resolution in the direction perpendicular to the print direction may be derived.

In a second step S2 at least one of the at least one printhead is rotated parallel to the XY plane such that projections of the nozzle distances on a direction perpendicular to the print direction correspond to the second resolution.

In a third step S3 the plurality of layers of the object are printed with the second resolution by ejecting filling material from the nozzles of the at least one rotated printhead towards the surface.

The method ends in the end point B.

The above disclosure is intended as merely exemplary, and not to limit the scope of the invention, which is to be determined by reference to the following claims.

## Claims

1. Method for printing a plurality of layers of an object on a surface in an XY plane in a print direction in the XY plane in at least one pass of at least one printhead of a printing system relatively over the surface per layer, while ejecting filling material from nozzles of the at least one printhead towards the surface, wherein nozzle distances between the nozzles of the at least one printhead determine a first resolution in a direction perpendicular to the print direction, wherein the at least one printhead is rotatable parallel to the XY plane and the method comprises the steps of

   a) receiving specifications of the object which define the object to be printed with a second resolution in the direction perpendicular to the print direction, which second resolution is higher than the first resolution,
   b) rotating at least one of the at least one printhead parallel to the XY plane such that projections of the nozzle distances on a direction perpendicular to the print direction correspond to the second resolution, and
   c) printing the plurality of layers of the object with the second resolution by ejecting filling material from the nozzles of the at least one rotated printhead towards the surface.

2. Method according to claim 1, wherein the step of printing of the layers of the object comprises the sub-step of adapting the firing moments of the nozzles in time in order to print the object according to the received specifications.

3. Method according to any one of the preceding claims, wherein the rotating step comprises a rotation of the at least one printhead with a rotation angle unequal to zero radians.

4. Method according to any one of the preceding claims, wherein the step of receiving specifications of the object to be printed comprises the sub-step of receiving a width of the object to be printed, said width being parallel to the XY plane and being orthogonal to the print direction and the method comprises the step of defining the second resolution by means of said width.

5. Method according to any one of the preceding claims, wherein the step of receiving specifications of the object to be printed comprises the sub-step of receiving a specification of at least one kind of filling material which is to be used during printing of the object.

6. Method according to any one of the preceding claims, wherein the method comprises the step of selecting another drop size of the filling material to be ejected from the nozzles, and the step of rotating at least one of the at least one printhead parallel to the XY plane comprises the sub-step of rotating the at least one of the at least one printhead parallel to the XY plane with a rotation angle which corresponds to a third resolution corresponding to the other selected drop size.

7. Method according to any one of the preceding claims, wherein the method comprises the step of selecting a plurality of filling materials for printing the object, each filling material intended to be ejected with a dedicated print resolution by a dedicated printhead and rotating each dedicated printhead parallel to the XY plane with a rotation angle that corresponds to the dedicated resolution.

8. Method according to any one of the preceding claims, wherein the printing system comprises a plurality of printheads and the method comprises the steps of receiving specifications of the object which define the object to be printed by the plurality of printhead with for each printhead a dedicated resolution in the direction perpendicular to the print direction, for each printhead rotating the printhead parallel to the XY plane such that projections of the nozzle distances on a direction perpendicular to the print direction correspond to the dedicated resolution, and for each printhead printing the plurality of layers of the object with the dedicated resolution by ejecting filling material from the nozzles of the rotated printhead.

9. Method according to any one of the preceding claims, wherein the printing system comprises at least two printheads of which one printhead is not rotated.

10. A printing system for printing a plurality of layers of an object on a surface in an XY plane in a print direction in the XY plane in at least one pass of at least one printhead of the printing system relatively over the surface per layer, the at least one printhead comprising a plurality of nozzles for ejecting filling material towards the surface, wherein nozzle distances between the nozzles of the plurality of nozzles determine a first resolution in a direction perpendicular to the print direction and the at least one printhead is rotatable parallel to the XY plane, and wherein the printing system comprises a print controller which is configured to execute the method according to any of the preceding claims.

11. A printing system according to claim 10, wherein each printhead is extended with a printhead holder that is rotatable in the XY plane.

12. A computer program product, including computer readable code embodied on a computer readable medium, said computer readable code comprising instructions for executing the steps of a method according to any one of the claims 1 - 9.

Fig. 1

Fig. 2 (Prior Art)

Fig. 3

Fig. 4

```
         ( A )
           |
           v
┌─────────────────────────────────────┐
│ Receive specifications of the object │
│ which define the object to be        │ ～ S1
│ printed with a second resolution in  │
│ the direction perpendicular to the   │
│ printing direction, which second     │
│ resolution is higher than the first  │
│ resolution.                          │
└─────────────────────────────────────┘
           |
           v
┌─────────────────────────────────────┐
│ Rotate at least one print head       │
│ parallel to the XY plane such that   │
│ projections of the nozzle distances  │ ～ S2
│ on a direction perpendicular to the  │
│ print direction correspond to the    │
│ second resolution                    │
└─────────────────────────────────────┘
           |
           v
┌─────────────────────────────────────┐
│ Print the layers of the object are   │
│ printed with the second resolution   │
│ by ejecting filling material from    │ ～ S3
│ the nozzles of the at least one      │
│ rotated print head towards the       │
│ surface                              │
└─────────────────────────────────────┘
           |
           v
         ( B )
```

Fig. 5

Europäisches
Patentamt

European
Patent Office

Office européen
des brevets

# EUROPEAN SEARCH REPORT

**Application Number**

EP 23 17 8765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/339724 A1 (MUNENAKA TAIYA [JP] ET AL) 24 November 2016 (2016-11-24) * the whole document * | 1-12 | INV. B29C64/112 B41J3/407 B41J25/00 |
| X | US 6 196 660 B1 (PARK JIN-HO [KR]) 6 March 2001 (2001-03-06) * the whole document * | 1,10,12 | |

**TECHNICAL FIELDS SEARCHED (IPC)**

B29C
B41J
B33Y

The present search report has been drawn up for all claims

| Place of search | Date of completion of the search | Examiner |
|---|---|---|
| The Hague | 30 November 2023 | Dewaele, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 17 8765**

This annex lists the patent family members relating to the patent documents cited in the above-mentioned European search report.
The members are as contained in the European Patent Office EDP file on
The European Patent Office is in no way liable for these particulars which are merely given for the purpose of information.

**30-11-2023**

| Patent document cited in search report | | Publication date | Patent family member(s) | | Publication date |
|---|---|---|---|---|---|
| US 2016339724 | A1 | 24-11-2016 | JP | 6477500 B2 | 06-03-2019 |
| | | | JP | WO2015107789 A1 | 23-03-2017 |
| | | | US | 2016339724 A1 | 24-11-2016 |
| | | | WO | 2015107789 A1 | 23-07-2015 |
| US 6196660 | B1 | 06-03-2001 | KR | 19980017749 U | 06-07-1998 |
| | | | US | 6196660 B1 | 06-03-2001 |

EPO FORM P0459

For more details about this annex : see Official Journal of the European Patent Office, No. 12/82